(19)

Europäisches
Patentamt

European
Patent Office

Office européen
des brevets

(11) **EP 4 773 516 A1**

(12) **EUROPEAN PATENT APPLICATION**
published in accordance with Art. 153(4) EPC

(43) Date of publication:
**08.07.2026 Bulletin 2026/28**

(21) Application number: **24869708.8**

(22) Date of filing: **30.04.2024**

(51) International Patent Classification (IPC):
***H04B 7/0456*** (2017.01)

(52) Cooperative Patent Classification (CPC):
**H04B 7/0456**

(86) International application number:
**PCT/CN2024/090874**

(87) International publication number:
**WO 2025/066140 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311292717**

(71) Applicant: **ZTE Corporation
Shenzhen, Guangdong 518057 (CN)**

(72) Inventors:
• **SI, Yuan**
  **Shenzhen, Guangdong 518057 (CN)**
• **CHEN, Yijian**
  **Shenzhen, Guangdong 518057 (CN)**
• **ZHANG, Shujuan**
  **Shenzhen, Guangdong 518057 (CN)**
• **YANG, Jun**
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **PRECODING INFORMATION INDICATION METHOD AND APPARATUS, AND STORAGE MEDIUM**

(57)     The present disclosure relates to the technical field of wireless communications, and provides a precoding information indication method and apparatus, and a storage medium, which can improve the receiving efficiency of a receiving end. The method comprises: determining a first precoding vector; processing the first precoding vector to obtain a second precoding vector, the second precoding vector being used for a reference signal; and determining precoding indication information on the basis of the first precoding vector and the second precoding vector, and sending the precoding indication information to the terminal device.

FIG. 3

**Description**

The present disclosure claims priority to Chinese Patent Application No. 202311292717.3, filed on September 28, 2023, which is hereby incorporated by reference in its entirety.

TECHNICAL FIELD

The present disclosure relates to the field of wireless communication technologies, and in particular, to a precoding information indication method and apparatus, and storage medium.

BACKGROUND

In wireless communication systems, in order to improve energy efficiency and spectrum efficiency, multi-antenna base stations usually use beams to transmit signals to users or perform beam training. During actual transmission, due to hardware limitations of an antenna array of a base station and limitations of a precoding vector F, there will be a difference between an actual transmitted precoding vector and a theoretical precoding vector, and the difference will lead to a decrease in receiving efficiency of a receiving end.

SUMMARY

The embodiments of the present disclosure provide a precoding information indication method and apparatus, and a storage medium, which may improve the receiving efficiency of the receiving end.

In an aspect, a precoding information indication method is provided and applied to a base station, and the method includes:

determining a first precoding vector;
processing the first precoding vector to obtain a second precoding vector, where the second precoding vector is used for a reference signal; and
determining precoding indication information based on the first precoding vector and the second precoding vector, and transmitting the precoding indication information to a terminal device.

In another aspect, a precoding information indication method is provided and applied to a terminal device, and the method includes:
receiving precoding indication information transmitted by a base station; where the precoding indication information is determined by a first precoding vector and a second precoding vector; the second precoding vector is determined based on the first precoding vector, and the second precoding vector is used for measuring a reference signal.

In yet another aspect, an indication apparatus is provided and applied to a base station, and the apparatus includes:

a determining module configured to determine a first precoding vector;
a processing module configured to process the first precoding vector to obtain a second precoding vector, where the second precoding vector is used for a reference signal;
the determining module further configured to determine precoding indication information based on the first precoding vector and the second precoding vector; and
a transmitting module configured to transmit the precoding indication information to a terminal device.

In yet another aspect, an indication apparatus is provided and applied to a terminal device, and the apparatus includes:
a receiving module configured to receive precoding indication information transmitted by a base station; where the precoding indication information is determined by a first precoding vector and a second precoding vector; the second precoding vector is determined based on the first precoding vector, and the second precoding vector is used for measuring a reference signal.

In yet another aspect, a communication device is provided and includes: a memory and a processor, where the memory is coupled to the processor; the memory is configured to store a computer program; and the processor, when executing the computer program, implements the precoding information indication methods in any of the above aspects.

In yet another aspect, a computer-readable storage medium is provided. The computer-readable storage medium has computer program instructions stored thereon, and the computer program instructions, when being executed by a processor, implement the precoding information indication methods in any of the above aspects.

In yet another aspect, a computer program product is provided. The computer program product includes computer program instructions, and the computer program instructions, when being executed by a processor, implement the precoding information indication methods in any of the above aspects.

The embodiments of the present disclosure provide a precoding information indication method. A first precoding vector is determined; and the first precoding vector is processed to obtain a second precoding vector, which is used for a reference signal; then, precoding indication information is determined based on the first precoding vector and the second precoding vector, and the precoding indication information is transmitted to a terminal device. It can be understood that based on the method provided in the embodiments of the present disclosure, in a case where the second precoding vector used in the actual transmission of the reference signal is inconsistent with the theoretically calculated first precoding vector, the precoding indication information may be determined based on the first precoding vector and the second precoding vector, and informed to the terminal device, so as to help the terminal device well receive the reference signal and improve the signal receiving efficiency of the terminal device.

BRIEF DESCRIPTION OF THE DRAWINGS

In order to describe technical solutions in the present disclosure more clearly, the accompanying drawings to be used in some embodiments of the present disclosure will be introduced briefly. Obvious, the accompanying drawings to be described below are merely drawings of some embodiments of the present disclosure, and a person of ordinary skill in the art may obtain other drawings according to these drawings.

FIG. 1 is an architecture schematic diagram of a mobile communication network in accordance with some embodiments of the present disclosure.
FIG. 2 is a structural schematic diagram of a base station in accordance with some embodiments of the present disclosure.
FIG. 3 is a first flowchart of a precoding information indication method in accordance with some embodiments of the present disclosure.
FIG. 4 is a second flowchart of a precoding information indication method in accordance with some embodiments of the present disclosure.
FIG. 5 is a third flowchart of a precoding information indication method in accordance with some embodiments of the present disclosure.
FIG. 6 is a first schematic diagram of transmission of precoding indication information in accordance with some embodiments of the present disclosure.
FIG. 7 is a fourth flowchart of a precoding information indication method in accordance with some embodiments of the present disclosure.
FIG. 8 is a second schematic diagram of transmission of precoding indication information in accordance with some embodiments of the present disclosure.
FIG. 9 is a third schematic diagram of transmission of precoding indication information in accordance with some embodiments of the present disclosure.
FIG. 10 is a fourth schematic diagram of transmission of precoding indication information in accordance with some embodiments of the present disclosure.
FIG. 11 is a fifth flowchart of a precoding information indication method in accordance with some embodiments of the present disclosure.
FIG. 12 is a schematic diagram of transmission of a signal in accordance with some embodiments of the present disclosure.
FIG. 13 is a sixth flowchart of a precoding information indication method in accordance with some embodiments of the present disclosure.
FIG. 14 is a seventh flowchart of a precoding information indication method in accordance with some embodiments of the present disclosure.
FIG. 15 is a first structural schematic diagram of an indication apparatus in accordance with some embodiments of the present disclosure.
FIG. 16 is a second structural schematic diagram of an indication apparatus in accordance with some embodiments of the present disclosure.
FIG. 17 is a structural schematic diagram of a communication device in accordance with some embodiments of the present disclosure.

DETAILED DESCRIPTION

Technical solutions in the present disclosure will be described clearly and completely with reference to the accompanying drawings in the present disclosure below. Obviously, the described embodiments are merely some but not all embodiments of the present disclosure. All other embodiments obtained by a person of ordinary skill in the art without making inventive efforts based on the embodiments of the present disclosure shall be included in the protection scope of the present disclosure.

It should be noted that in the present disclosure, wordings such as "exemplarily" or "for example" and variations thereof are used to indicate examples, instances or illustrations. Any embodiment or design solution described in the present disclosure as "exemplarily" or "for example" should not be illustrated as being more preferred or advantageous over other embodiments or design solutions. Specifically, the usage of the wordings such as "exemplarily" or "for example" is intended to present related concepts in a concrete way.

Hereinafter, the terms such as "first" and "second" are used for descriptive purposes only, but cannot to be construed as indicating or implying relative importance or implicitly indicating the number of indicated technical features. Thus, features defined with "first" or "second" may explicitly or implicitly include one or more of the features.

In the description of the present disclosure, unless otherwise specified, a symbol "/" means "or", and for example, A/B may represent A or B. Herein, "and/or" is only used to describe an associated relationship between associated objects, which represents that there may be three relationships, and for example, A and/or B may represent three cases: only A, both A and B, and only B. In addition, "at least one" means one or more, and "multiple/a plurality of" means two or more.

As described in the background, in the wireless communication systems, in order to improve energy efficiency and spectrum efficiency, multi-antenna base stations usually use beams to transmit signals to users or perform beam training. The base station generates a transmitting beam by changing a transmitting amplitude and a phase of each antenna. For example, assuming a base station has N antennas in total, the transmitting amplitudes and the phases of the N antennas are arranged into an N-dimensional vector, which is a precoding vector F of a transmitting antenna.

However, in actual transmission, there may be some limitations, and the some limitations include hardware limitations of an antenna array of the base station and limitations of the precoding vector F. For example, a power amplifier of the antenna is limited, and an amplitude of each element in the precoding vector F needs to be limited within a certain range. As another example, in a case where a plurality of antennas are connected to a power amplifier, transmitting weights of the antennas connected to the same power amplifier need to satisfy the constant modulus constraint (i.e., some elements in the precoding vector have equal modulus values).

If only a single beam is transmitted during transmission, the base station may transmit a directional beam under the above limitations by changing the transmitting phase of each antenna (each antenna has the same amplitude) in the antenna array. However, during communication or beam training between the base station and a user, in order to improve beam training efficiency, the base station often need to transmit a plurality of beams simultaneously. Assuming the base station transmits L beams simultaneously, the precoding vector $F=F1+F2+...+FL$ formed by superimposing weights of precoding vectors of the L beams no longer satisfies the above constant modulus constraint. In this case, there is a difference between an actual transmitted precoding vector $\tilde{F}$ and the theoretical precoding vector F, and the difference will lead to a decrease in the receiving efficiency of a receiving end.

To address the above technical problems, embodiments of the present disclosure provide a precoding information indication method. The idea lies in that: a first precoding vector is determined; and the first precoding vector is processed to obtain a second precoding vector, which is used for a reference signal; then, precoding indication information is determined based on the first precoding vector and the second precoding vector, and the precoding indication information is transmitted to a terminal device. It can be understood that based on the method provided in the embodiments of the present disclosure, in a case where the second precoding vector used in the actual transmission of the reference signal is inconsistent with the theoretically calculated first precoding vector, the precoding indication information may be determined based on the first precoding vector and the second precoding vector, and informed to the terminal device, so as to help the terminal device well receive the reference signal and improve the signal receiving efficiency of the terminal device.

The technical solutions provided in the embodiments of the present disclosure may be applied to various mobile communication networks, such as a new radio (NR) mobile communication network using 5G, a future mobile communication network, a multiple communication convergence system, and the like, which is not limited in the embodiments of the present disclosure.

In the embodiments of the present disclosure, a network architecture of a mobile communication network (including but not limited to 3G, 4G, 5G and future mobile communication networks) may include at least a first communication node and a second communication node. It should be understood that in this example, in a downlink, the first communication node may be a network-side device (e.g., including but not limited to a base station), and the second communication node may be a terminal-side device (e.g., including but not limited to a terminal device). Of course, in an uplink, the first communication node may be a terminal-side device, and the second communication node may be a network-side device. In device to device communication between two communication nodes, both the first communication node and the second communication node may be base stations or terminal devices. The first communication node and the second communication node may be referred to as a first node and a second node for short, respectively.

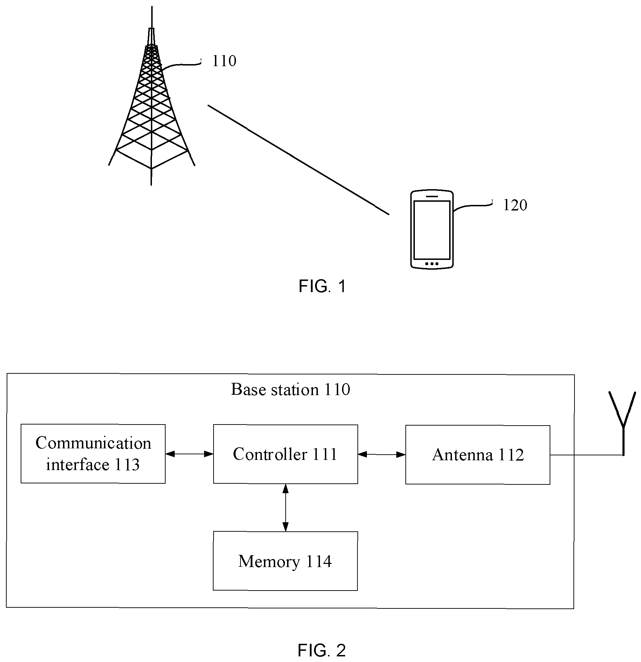

For example, the first communication node is a base station and the second communication node is a terminal device. FIG. 1 shows a schematic diagram of a network architecture of a mobile communication network provided by the embodiments of the present disclosure. As shown in FIG. 1, the mobile communication network includes a base station 110 and a terminal device 120.

In some embodiments, the base station 110 is used to transmit and receive electromagnetic waves.

In some embodiments, the base station 110 may be a base station or an evolutional Node B (eNB or eNodeB) in long term evolution (LTE) or long term evolution advanced (LTEA), a base station device in a 5G network, a base station in a future communication system, or the like. The base station may include various network-side devices such as a macro base station, a micro base station, a home base station, a remote radio head, a reconfigurable intelligent surface (RIS), a router or a wireless fidelity (WIFI) device.

In some embodiments, as shown in FIG. 2, the base station 110 includes a controller 111 and an antenna 112. The controller 111 is used to manage wireless communication interfaces and wireless channels. The antenna 112 is used to transmit and receive an electromagnetic wave. For example, the antenna 112 may transmit the electromagnetic wave under the control of the controller 111.

In some embodiments, the antenna 112 may include an antenna array, and the antenna array includes a plurality of antenna vibrators. Here, the antenna vibrator may be used to transmit and receive a signal. For example, in a transmitting mode, the antenna vibrator may be used as a transmitting antenna to transmit the signal; and in a receiving mode, the antenna vibrator may be used as a receiving antenna to receive the signal.

In some embodiments, the base station 110 may further include a communication interface 113 used for information interaction with other devices.

In some embodiments, the base station 110 may further include a memory 114 for storing data.

For example, the memory 114 may be a read-only memory (ROM) or any of other types of static storage devices that may store static information and instructions, a random access memory (RAM) or any of other types of dynamic storage devices that may store information and instructions, an electrically erasable programmable read-only memory (EEPROM), a magnetic disk storage medium or any of other magnetic storage devices, or any of other medium that may be used to carry or store desired program codes having a form of instructions or data structures and may be accessed by a computer, which is not limited thereto.

In some embodiments, a terminal device 120 may be a device with a wireless transceiving function. The device may be deployed on land, including indoors or outdoors, handheld, wearable or in-vehicle. The device may also be deployed on water (e.g., on a steamship). The device may also be deployed in air (e.g., on an airplane, on a balloon, or on a satellite). The terminal device may be a mobile phone, a pad, a computer with a wireless transceiving function, a virtual reality (VR) terminal, an augmented reality (AR) terminal, a wireless terminal in industrial control, a wireless terminal in unmanned driving, a wireless terminal in remote medical, a wireless terminal in smart grid, a wireless terminal in transportation safety, a wireless terminal in smart city, or a wireless terminal in smart home, or the like. The embodiments of the present disclosure do not limit the application scenarios. The terminal device may sometimes be referred to as a user, a user equipment (UE), an access terminal, a UE unit, a UE station, a mobile station, a mobile platform, a remote station, a remote terminal, a mobile device, a UE terminal, a wireless communication device, a UE agent, a UE device, or the like, which is not limited in the embodiments of the present disclosure.

It should be noted that FIG. 1 is only an exemplary framework diagram. The number of devices included in FIG. 1 and a name of each device are not limited, and in addition to the devices shown in FIG. 1, the communication system may further include other devices such as a core network device.

The application scenario in the embodiments of the present disclosure is not limited. The system architecture and business scenarios described in the embodiments of the present disclosure are intended to more clearly illustrate the technical solutions in the embodiments of the present disclosure and do not constitute a limitation on the technical solutions provided in the embodiments of the present disclosure. It can be seen by those skilled in the art that with evolution of the network architecture and emergence of new business scenarios, the technical solutions provided in the embodiments of the present disclosure are also applicable to similar technical problems.

The precoding information indication method provided in the embodiments of the present disclosure will be described in detail below.

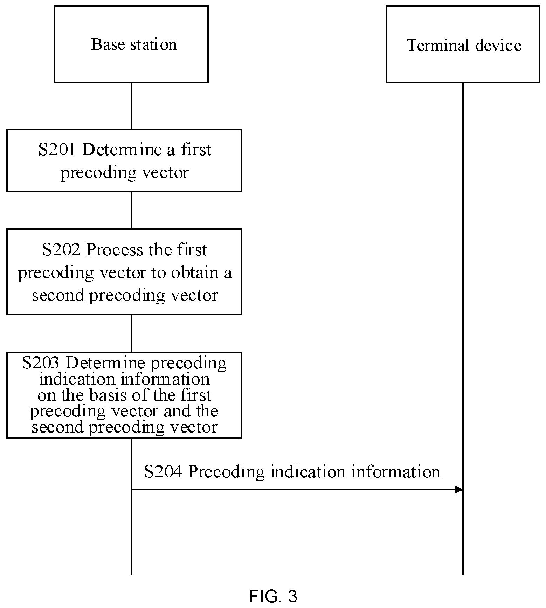

The present disclosure provides a precoding information indication method, and as shown in FIG. 3, the method includes the following steps S201 to S204.

In S201, a base station determines a first precoding vector.

In some embodiments, the above step S201 may be implemented as that: the base station determines the first precoding vector based on a preset linear construction function.

For example, the base station selects n codewords from a codebook based on the preset linear construction function, and performs weighted combination on the n codewords to obtain the first precoding vector, where n is an integer greater than or equal to 1.

In S202, the base station processes the first precoding vector to obtain a second precoding vector.

The second precoding vector is used for measuring a reference signal.

In some embodiments, the above step S202 may be implemented as that: the first precoding vector is processed based on a nonlinear processing function to obtain the second precoding vector. Here, m elements in the second precoding vector have equal magnitudes, where m is an integer greater than 1.

It should be noted that the nonlinear processing function is used to make the first precoding vector satisfy hardware constraints (e.g., antenna hardware structure) on the base station side.

For example, assuming the antenna array includes N antenna vibrators, and the normalized first precoding vector $F=[f_1, f_2, ......, f_N]$ is an N-dimensional vector, where an i-th element $f_i$ in the vector represents a transmitting amplitude and a phase of the i-th antenna. Due to limitations in the antenna hardware structure on the base station side, a plurality of transmitting antennas are usually connected to the same radio frequency link. Therefore, the actually transmitted second precoding vector $\tilde{F} = [\tilde{f}_1, \tilde{f}_2, ...\tilde{f}_N]$ needs to meet a certain constraint, and the transmitting amplitudes of the antennas connected to the same radio frequency link need to be the same. For example, in a case where N antennas are all connected to the same radio frequency link, each element $\tilde{f}_1, \tilde{f}_2,..., \tilde{f}_N$ in the second precoding vector $\tilde{F}$ has the equal magnitude. As another example, in a case where m antennas in the N antennas are connected to the same radio frequency link, elements in the second precoding vector corresponding to these m antennas have the equal magnitude.

In S203, the base station determines precoding indication information based on the first precoding vector and the second precoding vector.

In some embodiments, the precoding indication information includes at least one of: distortion indication information, difference indication information or parameter indication information.

The distortion indication information is configured to indicate whether the first precoding vector is same as the second precoding vector (i.e., whether the first precoding vector has been distorted). For example, the base station may use a 1-bit signaling message to indicate whether the first precoding vector has been distorted. If the bit is 1, it indicates that the first precoding vector has been distorted; and if the bit is 0, it indicates that the first precoding vector has not been distorted.

The difference indication information is configured to indicate a difference between the first precoding vector and the second precoding vector.

For example, the difference indication information includes at least one of: a residual vector obtained based on the difference between the first precoding vector and the second precoding vector, a magnitude of the residual vector, or a square of the magnitude of the residual vector.

For example, the residual vector may be expressed as $e=F-\tilde{F}=[e_1, e_2, ......, e_N]$, where $e_i = f_i - \tilde{f}_i$.

The magnitude of the residual vector may be expressed by the following formula (1):

$$\|e\| = \sqrt{\sum_{i=1}^{N}|e_i|^2} \qquad \qquad \text{Formula (1)}$$

The square of the magnitude of the residual vector may be expressed by the following formula (2):

$$\|e\|^2 = \sqrt{\sum_{i=1}^{N}|e_i|^2} \qquad \qquad \text{Formula (2)}$$

The parameter indication information is configured to indicate parameters of a nonlinear function used for generating the second precoding vector.

In some embodiments, in a case where the first precoding vector F is generated by performing weighted combination of the plurality of codewords, the above parameter indication information includes a weight $\alpha$ of each codeword, and the weight $\alpha$ is used to indicate a magnitude and a phase of the codeword. For example, the first precoding vector consists of L codewords b, and each codeword has an unequal transmitting weight. Then, the first precoding vector F may be expressed by the following formula (3):

$$F = \frac{1}{\sqrt{L}} (\alpha_1 b_1 + \alpha_2 b_2 + \cdots + \alpha_L b_L) \qquad \qquad \text{Formula (3)}$$

In some embodiments, the weight of the above codeword may be a difference generated after the first precoding vector is distorted. For example, assuming the first precoding vector satisfies the above formula (3), the second precoding vector satisfies the following formula (4):

$$\tilde{F} = \frac{1}{\sqrt{L}}(\beta_1 b_1 + \beta_2 b_2 + \cdots + \beta_L b_L) \qquad \text{Formula (4)}$$

The difference between the first precoding vector and the second precoding vector satisfies the following formula (5):

$$F - \tilde{F} = \frac{1}{\sqrt{L}}(\lambda_1 b_1 + \lambda_2 b_2 + \cdots + \lambda_L b_L) \qquad \text{Formula (5)}$$

Here, $\lambda_i = \alpha_i - \beta_i$, and $\beta_i$ is a weight of each codeword in the second precoding vector.

In some embodiments, the parameter indication information further includes indices of the n codewords selected by the base station from the codebook.

In S204, the base station transmits the precoding indication information to a terminal device. Accordingly, the terminal device receives the precoding indication information transmitted by the base station.

In some embodiments, the base station may transmit one or more pieces of precoding indication information to the terminal device.

In some embodiments, the method further includes performing quantization processing on the precoding indication information.

For example, assuming the precoding indication information includes a residual vector e, performing quantization processing on the precoding indication information includes: quantizing a magnitude and a phase of each element in the residual vector e; or using a set of preset basis vectors to linearly represent the residual vector, and quantizing a result of the linear representation.

For example, the quantization processing includes uniform quantization and non-uniform quantization. For example, assuming the base station uses 3 bits to quantize the magnitude of each element in the residual vector, a result of bit uniform quantization is shown in Table 1 below, and a result of bit non-uniform quantization is shown in Table 2 below.

Table 1

| Serial Number | Quantized value |
| --- | --- |
| 0 | 0 |
| 1 | 1/7 |
| 2 | 2/7 |
| 3 | 3/7 |
| 4 | 4/7 |
| 5 | 5/7 |
| 6 | 6/7 |
| 7 | 1 |

Table 2

| Serial Number | Quantized value |
| --- | --- |
| 0 | 0 |
| 1 | $\sqrt{1/64}$ |
| 2 | $\sqrt{1/32}$ |
| 3 | $\sqrt{1/16}$ |
| 4 | $\sqrt{1/8}$ |
| 5 | $\sqrt{1/4}$ |

(continued)

| Serial Number | Quantized value |
|---|---|
| 6 | $\sqrt{1/2}$ |
| 7 | 1 |

It can be understood that each element in the residual vector may be quantized using the quantization method described above. Moreover, elements such as the transmitting precoding vector F, the magnitude of the residual vector, the square of the magnitude of the residual vector, the beam weight $\alpha$, and the difference of the beam weight may each be quantized using the above method.

Furthermore, based on the above quantization process, the step S204 may be implemented as: transmitting the precoding indication information after quantization processing to the terminal device.

In a possible implementation, the step S204 may be implemented as: transmitting the precoding indication information to the terminal device in a case of meeting preset conditions.

For example, the preset conditions include at least one of:

a reference signal receiving quality reported by the terminal device being less than a first threshold;
a reference signal receiving power reported by the terminal device being less than a second threshold; or
a signal-to-interference-plus-noise ratio (SINR) reported by the terminal device being less than a third threshold.

In another possible implementation, the step S204 may be implemented as: transmitting the precoding indication information to the terminal device in response to a request from the terminal device.

In some embodiments, the above method further includes the following step S301.

In S301, the reference signal is transmitted to the terminal device based on the precoding indication information. Accordingly, the terminal device receives the reference signal transmitted by the base station.

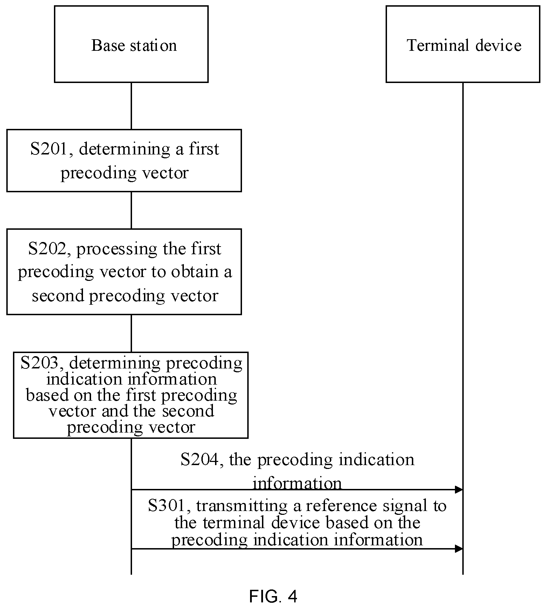

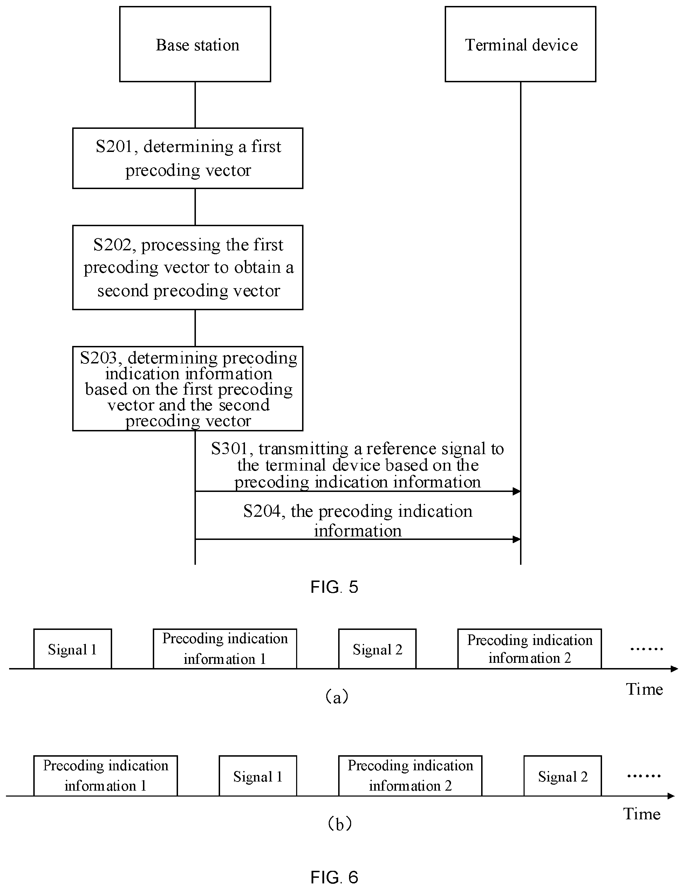

It will be noted that an execution order of the above steps S204 and S301 is not limited in the embodiments of the present disclosure. For example, as shown in FIG. 4, the step S204 may be performed first, and then the step S301 may be performed. Alternatively, as shown in FIG. 5, the step S301 may be performed first, and then the step S204 may be performed.

For example, as shown in (a) of FIG. 6, the base station transmits a signal to the terminal device, and then transmits precoding indication information corresponding to the signal to the terminal device. For example, the base station transmits a signal 1 to the terminal device, and then transmits precoding indication information 1 corresponding to the signal 1 to the terminal device, so that the terminal device may receive the signal 1 according to the precoding indication information 1; and the base station transmits a signal 2 to the terminal device, and then transmits precoding indication information 2 corresponding to the signal 2 to the terminal device, so that the terminal device may receive the signal 2 according to the precoding indication information 2.

For example, as shown in (b) of FIG. 6, the base station transmits precoding indication information to the terminal device, and then transmits a signal corresponding to the precoding indication information to the terminal device. For example, the base station transmits precoding indication information 1 to the terminal device, and then transmits a signal 1 corresponding to the precoding indication information 1 to the terminal device, so that the terminal device may receive the signal 1 according to the precoding indication information 1; and the base station transmits precoding indication information 2 to the terminal device, and then transmits a signal 2 corresponding to the precoding indication information 2 to the terminal device, so that the terminal device may receive the signal 2 according to the precoding indication information 2.

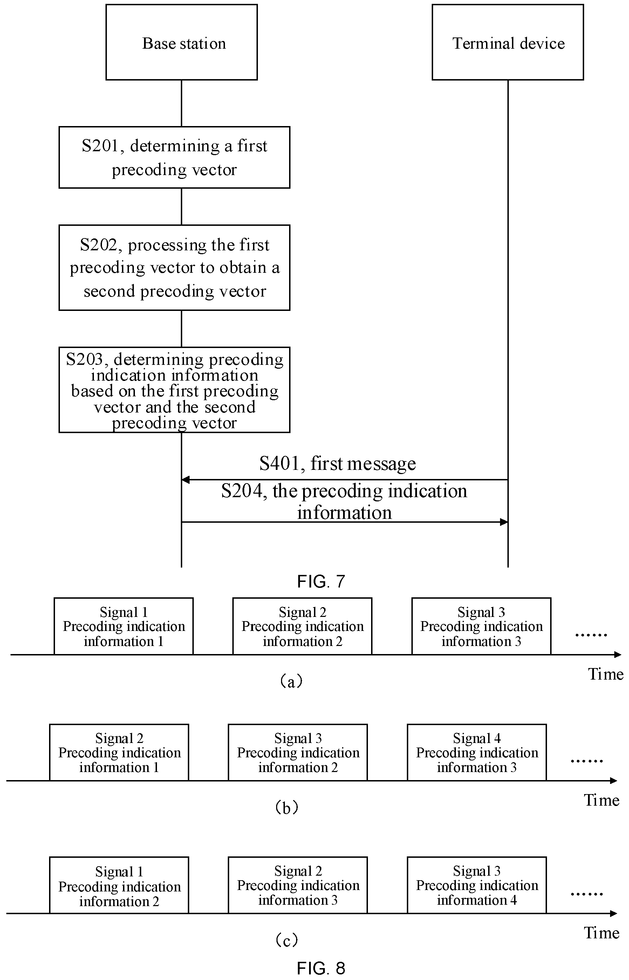

For example, as shown in FIG. 7, before the above step S204, the method may further include the following step S401.

In S401, the terminal device transmits a first message to the base station. Accordingly, the base station receives the first message transmitted by the terminal device.

The first message is used for requesting the precoding indication information.

For example, the first message is carried in a sounding reference signal (SRS); alternatively, the first message is carried in uplink control information (UCI).

In some embodiments, the step S401 may be implemented as that: the terminal device transmits the first message to the base station in a case where the terminal device needs to improve its receiving quality or measurement accuracy.

In a possible implementation, based on the above step S401, the above step S204 may be implemented as: transmitting the precoding indication information to the terminal device in response to the first message.

In some embodiments, the first message includes a transmission manner of the precoding indication information, and the transmission manner includes one of following: the precoding indication information being carried in the reference signal and the precoding indication information being carried in signaling.

Accordingly, the step S204 may be implemented as: transmitting the precoding indication information to the terminal device based on the transmission manner. The different transmission manners will be described below.

In the first transmission manner, the precoding indication information is carried in the reference signal.

In a possible implementation, the precoding indication information is precoding indication information corresponding to the current reference signal. For example, as shown in (a) of FIG. 8, the base station transmits a signal 1, a signal 2 and a signal 3 to the terminal device, respectively; where the signal 1 includes precoding indication information 1 corresponding to the signal 1, the signal 2 includes precoding indication information 2 corresponding to the signal 2, and the signal 3 includes precoding indication information 3 corresponding to the signal 3.

In another possible implementation, the precoding indication information is precoding indication information corresponding to the previous reference signal. For example, as shown in (b) of FIG. 8, the base station transmits a signal 2, a signal 3 and a signal 4 to the terminal device, respectively; where the signal 2 includes precoding indication information 1 corresponding to a signal 1, the signal 3 includes precoding indication information 2 corresponding to the signal 2, and the signal 4 includes precoding indication information 3 corresponding to the signal 3.

In another possible implementation, the precoding indication information is precoding indication information corresponding to the next reference signal. For example, as shown in (c) of FIG. 8, the base station transmits a signal 1, a signal 2 and a signal 3 to the terminal device, respectively; where the signal 1 includes precoding indication information 2 corresponding to the signal 2, the signal 2 includes precoding indication information 3 corresponding to the signal 3, and the signal 3 includes precoding indication information 4 corresponding to a signal 4.

In another possible implementation, the reference signal may carry a plurality of pieces of precoding indication information. For example, the plurality of pieces of precoding indication information include precoding indication information corresponding to the current reference signal, and precoding indication information corresponding to the previous reference signal or the next reference signal.

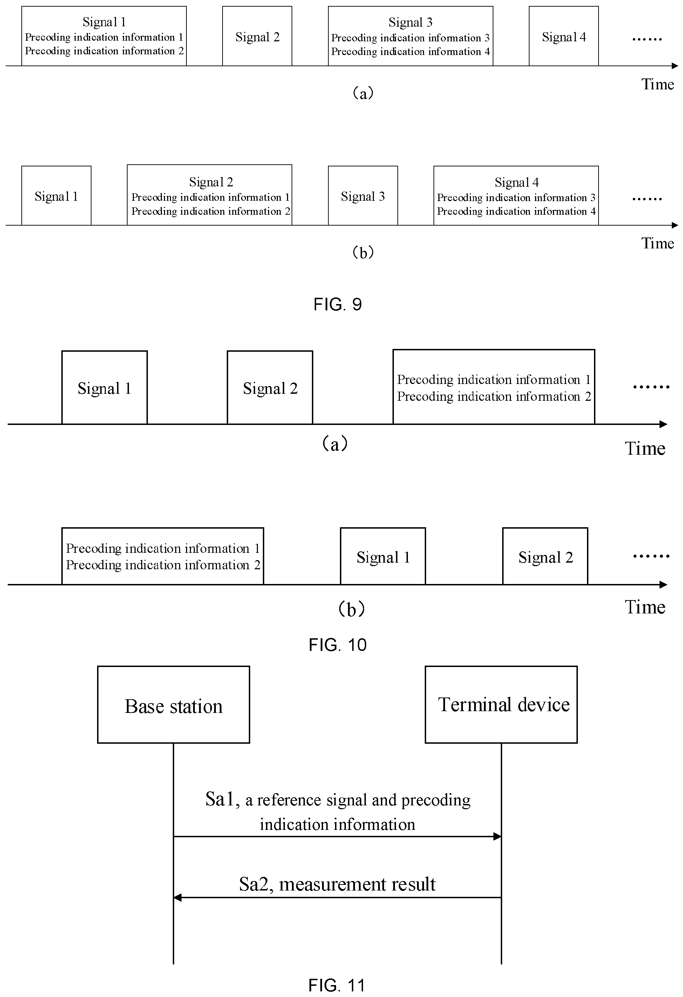

For example, as shown in (a) of FIG. 9, the base station transmits a signal 1 and a signal 2 to the terminal device, where the signal 1 includes precoding indication information 1 corresponding to the signal 1 and precoding indication information 2 corresponding to the signal 2. The base station transmits a signal 3 and a signal 4 to the terminal device, where the signal 3 includes precoding indication information 3 corresponding to the signal 3 and precoding indication information 4 corresponding to the signal 4.

For example, as shown in (b) of FIG. 9, the base station transmits a signal 1 and a signal 2 to the terminal device, where the signal 2 includes precoding indication information 1 corresponding to the signal 1 and precoding indication information 2 corresponding to the signal 2. The base station transmits a signal 3 and a signal 4 to the terminal device, where the signal 4 includes precoding indication information 3 corresponding to the signal 3 and precoding indication information 4 corresponding to the signal 4.

In the second transmission manner, the precoding indication information is carried in the signaling.

In some embodiments, the signaling includes at least one of: a master information block (MIB), a system information block (SIB), downlink control information (DCI), control signaling of media access control-control element (MAC-CE), or control signaling of a radio resource control (RRC) layer.

In some embodiments, the signaling may carry one or more pieces of precoding indication information.

For example, a case where the signaling carries one piece of precoding indication information may be as shown in (a) of FIG. 6 above. The base station transmits the signal 1 to the terminal device, and then transmits signaling including the precoding indication information 1 corresponding to the signal 1 to the terminal device. Alternatively, a case where the signaling carries one piece of precoding indication information may be as shown in (b) of FIG. 6 above. The base station transmits signaling including the precoding indication information 1 to the terminal device, and then transmits the signal 1 corresponding to the precoding indication information 1 to the terminal device.

For example, a case where the signaling carries a plurality of pieces of precoding indication information may be as shown in (a) of FIG. 10. The base station transmits a signal 1 and a signal 2 to the terminal device, and then transmits signaling including precoding indication information 1 and precoding indication information 2 to the terminal device. Alternatively, as shown in (b) of FIG. 10, the base station transmits signaling including precoding indication information 1 and precoding indication information 2 to the terminal device, and then transmits a signal 1 corresponding to the precoding indication information 1 and a signal 2 corresponding to the precoding indication information 2 to the terminal device.

To facilitate understanding, the precoding information indication method will be described below in a form of scenarios.

For example, in a scenario where a base station and a terminal device are conducting downlink beam training, the base station may transmit a downlink reference signal to the terminal device, and then the terminal device may measure the downlink reference signal and report the measurement result. For example, the terminal device may help the base station identify at least one high-energy transmitting beam.

As shown in FIG. 11, during the downlink beam training between the base station and the terminal device, the precoding information indication method may be implemented as the following steps Sa1 and Sa2.

In Sa1, the base station transmits a reference signal and precoding indication information to the terminal device.

The reference signal may be used for measuring wireless channel parameters.

For example, the precoding indication information and the reference signal may use a transmission manner in any of the above embodiments. For example, the base station may transmit the precoding indication information and then transmit the reference signal. Alternatively, the base station may transmit the reference signal and then transmit the precoding indication information. Alternatively, the precoding indication information may be carried in the reference signal.

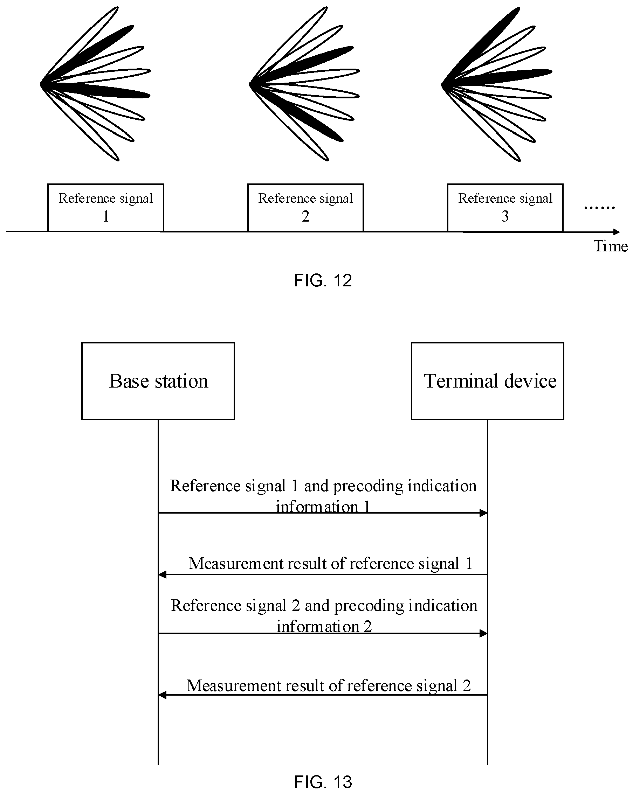

In some embodiments, as shown in FIG. 12, the base station may use a plurality of beams to transmit a reference signal, and reference signals transmitted at different times use different beams. In the scenario shown in FIG. 12, the precoding indication information further includes a sequence number of a beam transmitted by the base station.

In some embodiments, in a case where the base station uses the plurality of beams to transmit the reference signal, the reference signal may have a quasi-co-location relationship with multiple reference signals simultaneously.

In some embodiments, beam serial numbers may be explicitly or implicitly carried in the reference signal. For example, in a case where the beam serial numbers are explicitly carried in the reference signal, a bitmap may be used to represent the beams used for transmitting the reference signal; and in a case where the beam serial numbers are implicitly carried in the reference signal, the beams need to correspond to time-domain resources for transmitting the signal. For example, as shown in Table 3 below, different time-domain resources correspond to different beam serial numbers.

Table 3

| Time-frequency resources | Beam serial number |
|---|---|
| Time-frequency resource 1 | Sequence Set 1 |
| Time-frequency resource 2 | Sequence set 2 |
| | ⋮ |
| Time-frequency resource N | Sequence set N |

For example, the reference signal may include at least one of the following: a Synchronization Singal and PBCH Block (SSB) obtained by combining a synchronization signal and a Physical Broadcast Channel Block (PBCH), a Channel State Information Reference Signal (CSI-RS), a Demdulation Reference Signal (DMRS), and a Phase Tracking Reference Signal (PT-RS).

In some embodiments, in a case where the reference signal includes the SSB, the reference signal may be transmitted in a form of sets. Each SSB set contains a plurality of SSBs, and the SSBs are transmitted in the first half of each frame. Moreover, different SSB sets may include the same or different numbers of SSBs. For example, the number of SSBs included in the SSB set may vary for different frequency bands; alternatively, the number of SSBs included in the SSB set may be configured by the base station. For example, below 6 GHz, each SSB set contains 4 or 8 SSBs, while above 6 GHz, each SSB set contains 64 SSBs.

In some embodiments, in a case where the reference signal includes the CSI-RS, the reference signal may be transmitted in a packet manner. For example, the base station may configure a plurality of CSI-RS resource sets for the terminal device, and each CSI-RS resource set contains a plurality of CSI-RS resources.

In Sa2, the terminal device transmits the measurement result to the base station.

For example, the measurement result may include at least one of the following: a reference signal receiving quality (RSRQ), a reference signal receiving power (RSRP), a reference signal strength indicator (RSSI), a reference signal time-frequency resource, a reference signal time-domain serial number and a reference signal set serial number.

In a possible implementation, the base station transmits a reference signal and precoding indication information corresponding to the reference signal to the terminal device. Accordingly, the terminal device transmits a measurement result to the base station, where the measurement result includes the measurement result of the reference signal. For example, as shown in FIG. 13, the base station transmits a reference signal 1 and precoding indication information 1 of the reference signal 1 to the terminal device; accordingly, the terminal device transmits a measurement result of the reference signal 1 to the base station; then, the base station transmits a reference signal 2 and precoding indication information 2 of the reference signal 2 to the terminal device; accordingly, the terminal device transmits a measurement result of the reference signal 2 to the base station.

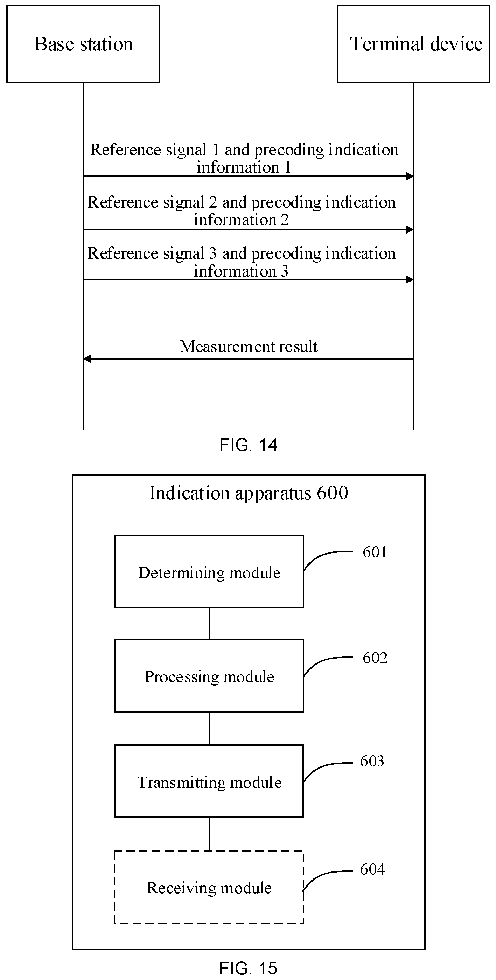

In another possible implementation, after the base station transmits a plurality of reference signals and pieces of precoding indication information corresponding to the plurality of reference signals to the terminal device, the terminal device transmits a measurement result to the base station. The measurement result may include a measurement result of the plurality of reference signals, or a measurement result of part of the plurality of reference signals. For example, as shown in FIG. 14, the base station sequentially transmits a reference signal 1 and precoding indication information 1 of the reference signal 1, a reference signal 2 and precoding indication information 2 of the reference signal 2, and a reference signal 3 and precoding indication information 3 of the reference signal 3 to the terminal device. Then, the terminal device transmits a measurement result to the base station, where the measurement result may include a measurement result of the reference signal 1, the reference signal 2 and the reference signal 3, or a measurement result of any one or two of the three reference signals.

For example, in a case where the base station transmits a plurality of reference signals to the terminal device, the measurement result transmitted by the terminal device to the base station may include any of the following:

an identifier of a first reference signal with the strongest signal strength among the plurality of reference signals, and a receiving power of the first reference signal;

L reference signals each with a signal strength greater than a preset threshold among the plurality of reference signals, and a receiving power of each of the L reference signals, where L is an integer greater than or equal to 1; and

a serial number of a reference signal set to which a first reference signal with the strongest signal strength among the plurality of reference signals, and a receiving power of the first reference signal.

The solutions in the embodiments of the present disclosure are described above mainly from a perspective of methods. It may be understood that in order to achieve the above functions, an indication apparatus includes at least one of hardware structure(s) and software module(s) corresponding to execution of each function. It should be easily realized by those skilled in the art that in combination with units and algorithm steps of each example described in the disclosed embodiments herein, the embodiments of the present disclosure may be implemented in a form of hardware or a combination of hardware and computer software. Whether a certain function is performed by means of hardware or by means of computer software driving hardware depends on both specific application and design constraint conditions of the technical solutions. Professional technicians may use different methods for each specific application to implement the described functions, but such an implementation should not be considered beyond the scope of the embodiments of the present disclosure.

It may be understood that in order to achieve the above functions, an indication apparatus includes hardware structure(s) and/or software module(s) corresponding to execution of each function. It should be easily realized by those skilled in the art that in combination with algorithm steps of each example described in the embodiments of the present disclosure, the present disclosure may be implemented in a form of hardware or a combination of hardware and computer software. Whether a certain function is performed by means of hardware or by means of computer software driving hardware depends on both specific application and design constraint conditions of the technical solutions. Professional technicians may use different methods for each specific application to implement the described functions, but such an implementation should not be considered beyond the scope of the present disclosure.

In the embodiments of the present disclosure, the indication apparatus may be divided into functional modules based on the above method embodiments, example, each function may correspond to a separate functional module, or two or more functions may be integrated into a single functional module. The above integrated module may be implemented in a form of hardware or may be implemented in a form of software. It should be noted that the division of modules in the embodiments of the present disclosure is illustrative and is merely a logical functional division, and there may be other division methods in actual implementations. The following will be described by considering an example where each function corresponds to a separate functional module.

FIG. 15 is a structural schematic diagram of an indication apparatus provided in the embodiments of the present disclosure. The indication apparatus is applied to a base station, and may perform the precoding information indication method provided in the above method embodiments. As shown in FIG. 15, the indication apparatus 600 includes a determining module 601, a processing module 602 and a transmitting module 603. In some other embodiments, the indication apparatus 600 further includes a receiving module 604.

The determining module 601 is configured to determine a first precoding vector.

The processing module 602 is configured to process the first precoding vector to obtain a second precoding vector, where the second precoding vector is used for a reference signal.

The determining module 601 is further configured to determine precoding indication information based on the first precoding vector and the second precoding vector.

The transmitting module 603 is configured to transmit the precoding indication information to a terminal device.

In some embodiments, the determining module 601 is specifically configured to determine the first precoding vector based on a preset linear construction function.

In some embodiments, the determining module 601 is specifically configured to select codewords from a codebook based on the preset linear construction function, n being an integer greater than or equal to 1, and perform weighted combination on the n codewords to obtain the first precoding vector.

In some embodiments, the processing module 602 is specifically configured to process the first precoding vector based on a nonlinear processing function to obtain the second precoding vector.

In some embodiments, m elements in the second precoding vector have equal magnitudes, where m is an integer greater than 1.

In some embodiments, the precoding indication information includes at least one of: distortion indication information, difference indication information or parameter indication information. Here, the distortion indication information is configured to indicate whether the first precoding vector is same as the second precoding vector; the difference indication information is configured to indicate a difference between the first precoding vector and the second precoding vector, and the parameter indication information is configured to indicate parameters of a nonlinear function used for generating the second precoding vector.

In some embodiments, the difference indication information includes at least one of: a residual vector obtained based on the difference between the first precoding vector and the second precoding vector, a magnitude of the residual vector, or a square of the magnitude of the residual vector.

In some embodiments, the transmitting module 603 is further configured to transmit the reference signal to the terminal device based on the precoding indication information.

In some embodiments, the precoding indication information is carried in the reference signal.

In some embodiments, the precoding indication information is carried in signaling, and the signaling includes at least one of: a master information block, a system information block, downlink control information, control signaling of a media access control-control element, or control signaling of a radio resource control layer.

In some embodiments, the processing module 602 is further configured to perform quantization processing on the precoding indication information, where the quantization processing includes uniform quantization and non-uniform quantization. The transmitting module 603 is further configured to transmit the precoding indication information after quantization processing to the terminal device.

In some embodiments, the receiving module 604 is configured to receive a first message transmitted by the terminal device, where the first message is configured to request the precoding indication information. The transmitting module 603 is specifically configured to transmit the precoding indication information to the terminal device in response to the first message.

In some embodiments, the first message includes a transmission manner of the precoding indication information, and the transmission manner includes one of following: being carried in the reference signal and being carried in signaling. The transmitting module 603 is specifically configured to transmit the precoding indication information to the terminal device based on the transmission manner.

In some embodiments, the first message is carried in a sounding reference signal; alternatively, the first message is carried in uplink control information.

In some embodiments, the transmitting module 603 is specifically configured to transmit the precoding indication information to the terminal device in a case of meeting preset conditions. The preset conditions include at least one of:

a reference signal receiving quality reported by the terminal device being less than a first threshold;
a reference signal receiving power reported by the terminal device being less than a second threshold; or
a signal-to-interference-plus-noise ratio reported by the terminal device being less than a third threshold.

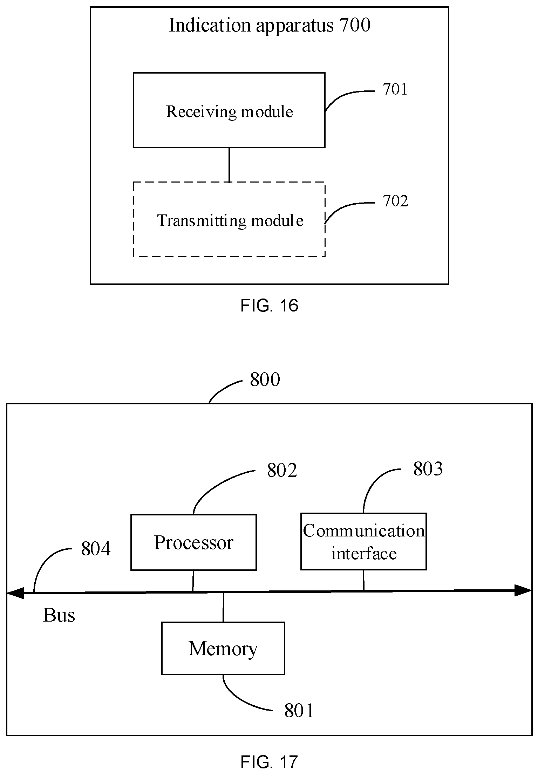

FIG. 16 is a structural schematic diagram of another indication apparatus provided in the embodiments of the present disclosure. The indication apparatus is applied to a terminal device, and may perform the precoding information indication method provided in the above method embodiments. As shown in FIG. 16, the indication apparatus 700 includes a receiving module 701. In some other embodiments, the indication apparatus 700 further includes a transmitting module 702.

The receiving module 701 is configured to receive precoding indication information transmitted by a base station. The precoding indication information is determined by a first precoding vector and a second precoding vector; the second precoding vector is determined based on the first precoding vector, and the second precoding vector is used for measuring a reference signal.

In some embodiments, the first precoding vector is determined based on a preset linear construction function.

In some embodiments, the first precoding vector is obtained by weighting n codewords, where the n codewords are codewords selected from a codebook based on the preset linear construction function, wherein n is an integer greater than or equal to 1.

In some embodiments, the second precoding vector is obtained by processing the first precoding vector based on a nonlinear processing function.

In some embodiments, m elements in the second precoding vector have equal magnitudes, where m is an integer greater than 1.

In some embodiments, the precoding indication information includes at least one of: distortion indication information, difference indication information or parameter indication information. Here, the distortion indication information is configured to indicate whether the first precoding vector is same as the second precoding vector; the difference indication information is configured to indicate a difference between the first precoding vector and the second precoding vector, and the parameter indication information is configured to indicate parameters of a nonlinear function used for generating the second precoding vector.

In some embodiments, the difference indication information includes at least one of: a residual vector obtained based on the difference between the first precoding vector and the second precoding vector, a magnitude of the residual vector, or a square of the magnitude of the residual vector.

In some embodiments, the receiving module 701 is further configured to receive the reference signal transmitted by the base station.

In some embodiments, the precoding indication information is carried in the reference signal.

In some embodiments, the precoding indication information is carried in signaling, and the signaling includes at least one of: a master information block, a system information block, downlink control information, control signaling of a media access control-control element, or control signaling of a radio resource control layer.

In some embodiments, the receiving module 701 is specifically configured to receive the precoding indication information after quantization processing, where the quantization processing includes uniform quantization and non-uniform quantization.

In some embodiments, the transmitting module 702 is configured to transmit a first message to the terminal device, where the first message is configured to request the precoding indication information.

In some embodiments, the first message includes a transmission manner of the precoding indication information, and the transmission manner includes one of following: being carried in the reference signal and being carried in signaling.

In some embodiments, the first message is carried in a sounding reference signal; alternatively, the first message is carried in uplink control information.

In a case where the functions of the above integrated module are implemented in a form of hardware, the embodiments of the present disclosure provide a possible structure of a communication device involved in the above embodiments. As shown in FIG. 17, the communication device 800 includes: a processor 802 and a bus 804. Optionally, the communication device may further include a memory 801. Optionally, the communication device 800 may further include a communication interface 803.

The processor 802 may implement or perform various exemplary logical blocks, modules and circuits described in combination with the embodiments of the present disclosure. The processor 802 may be a central processor, a general-purpose processor, a digital signal processor, an application specific integrated circuit, a field programmable gate array, or other programmable logic devices, a transistor logic device, a hardware component or any combination thereof, and may implement or perform various exemplary logical blocks, modules and circuits described in combination with the embodiments of the present disclosure. The processor 802 may also be a combination that implements computing functions, for example, a combination including one or more microprocessors, a combination of a digital signal processor (DSP) and a microprocessor, or the like.

The communication interface 803 is configured to be connected with other devices via a communication network. The communication network may be an Ethernet, a wireless access network, a wireless local area network (WLAN), or the like.

The memory 801 may be a read-only memory (ROM) or any of other types of static storage devices that may store static information and instructions, a random access memory (RAM) or any of other types of dynamic storage devices that may store information and instructions, an electrically erasable programmable read-only memory (EEPROM), a magnetic disk storage medium or any of other magnetic storage devices, or any of other medium that may be used to carry or store desired program codes having a form of instructions or data structures and may be accessed by a computer, which is not limited thereto.

In a possible implementation, the memory 801 may exist independently of the processor 802, and the memory 801 may be connected to the processor 802 via the bus 804, and is used for storing instructions or program codes. The processor 802, when call and execute the instructions or program codes stored in the memory 801, may implement the precoding information indication method provided in the embodiments of the present disclosure. In another possible implementation, the memory 801 and the processor 802 may also be integrated together.

The bus 804 may be an extended industry standard architecture (EISA) bus or the like. The bus 804 may be classified as an address bus, a data bus, a control bus, or the like. For convenience of representation, only a thick line is shown in FIG. 17 for representation, but it does not mean that there is only one bus or one type of bus.

Some embodiments of the present disclosure provide a computer-readable storage medium (e.g., a non-transitory computer-readable storage medium). The computer-readable storage medium has computer program instructions stored thereon, and the computer program instructions, when running on a computer, enable the computer to perform the precoding information indication method in any of the above embodiments.

For example, the above computer-readable storage medium may include, but is not limited to: a magnetic storage device (e.g., a hard disk, a floppy disk, or a magnetic tape), an optical disk (e.g., a compact disk (CD)), a digital versatile disk (DVD), a smart card and a flash device (e.g., an erasable programmable read-only memory (EPROM), a card, a stick or a key drive). The various computer-readable storage media described in the present disclosure may represent one or more devices and/or other machine-readable storage media for storing information. The term "machine-readable storage medium" may include, but is not limited to, a wireless channel and various other media capable of storing, containing and/or carrying instructions and/or data.

The embodiments of the present disclosure provide a computer program product including instructions. The computer program product, when running on a computer, enables the computer to perform the precoding information indication method in any of the above embodiments.

The foregoing descriptions are merely specific implementations of the present disclosure, but the protection scope of the present disclosure is not limited thereto. Any changes or replacements within the technical scope of the present disclosure shall be included in the protection scope of the present disclosure. Therefore, the protection scope of the present disclosure shall be subject to the protection scope of the claims.

**Claims**

1. A precoding information indication method, applied to a base station, the method comprising:

    determining a first precoding vector;
    processing the first precoding vector to obtain a second precoding vector, wherein the second precoding vector is used for a reference signal;
    determining precoding indication information based on the first precoding vector and the second precoding vector, and transmitting the precoding indication information to a terminal device.

2. The method according to claim 1, wherein determining the first precoding vector, comprises:
    determining the first precoding vector based on a preset linear construction function.

3. The method according to claim 2, wherein determining the first precoding vector based on the preset linear construction function, comprises:

    selecting n codewords from a codebook based on the preset linear construction function, wherein n is an integer greater than or equal to 1; and
    performing weighted combination on the n codewords to obtain the first precoding vector.

4. The method according to claim 1, wherein processing the first precoding vector to obtain the second precoding vector, comprises:
    processing the first precoding vector based on a nonlinear processing function to obtain the second precoding vector.

5. The method according to claim 1, wherein m elements in the second precoding vector have equal magnitudes, wherein m is an integer greater than 1.

6. The method according to claim 1, wherein the precoding indication information comprises at least one of distortion indication information, difference indication information or parameter indication information;
    wherein the distortion indication information is configured to indicate whether the first precoding vector is same as the second precoding vector; the difference indication information is configured to indicate a difference between the first precoding vector and the second precoding vector; and the parameter indication information is configured to indicate parameters of a nonlinear function used for generating the second precoding vector.

7. The method according to claim 6, wherein the difference indication information comprises at least one of: a residual vector obtained based on the difference between the first precoding vector and the second precoding vector, a magnitude of the residual vector, or a square of the magnitude of the residual vector.

8. The method according to claim 1, wherein before transmitting the precoding indication information to the terminal device, the method further comprises:
    transmitting the reference signal to the terminal device based on the precoding indication information.

9. The method according to claim 1, wherein after transmitting the precoding indication information to the terminal device, the method further comprises:

transmitting the reference signal to the terminal device based on the precoding indication information.

10. The method according to claim 1, wherein the precoding indication information is carried in the reference signal.

11. The method according to claim 1, wherein the precoding indication information is carried in signaling, and the signaling comprises at least one of: a master information block, a system information block, downlink control information, control signaling of a media access control-control element, or control signaling of a radio resource control layer.

12. The method according to claim 1, further comprising:

performing quantization processing on the precoding indication information, wherein the quantization processing comprises uniform quantization and non-uniform quantization; wherein
transmitting the precoding indication information to the terminal device, comprises:
transmitting the precoding indication information after quantization processing to the terminal device.

13. The method according to claim 1, further comprising:

receiving a first message transmitted by the terminal device, wherein the first message is used for requesting the precoding indication information; and
transmitting the precoding indication information to the terminal device, comprising:
transmitting the precoding indication information to the terminal device in response to the first message.

14. The method according to claim 13, wherein the first message comprises a transmission manner of the precoding indication information, and the transmission manner comprises one of following: being carried in the reference signal and being carried in signaling; and
transmitting the precoding indication information to the terminal device, comprises:
transmitting the precoding indication information to the terminal device based on the transmission manner.

15. The method according to claim 13, wherein the first message is carried in a sounding reference signal; or the first message is carried in uplink control information.

16. The method according to claim 1, wherein transmitting the precoding indication information to the terminal device, comprises:
transmitting the precoding indication information to the terminal device in a case of meeting preset conditions, wherein the preset conditions comprises at least one of:

a reference signal receiving quality reported by the terminal device being less than a first threshold;
a reference signal receiving power reported by the terminal device being less than a second threshold; or
a signal-to-interference-plus-noise ratio reported by the terminal device being less than a third threshold.

17. A precoding information indication method, applied to a terminal device, the method comprising:
receiving precoding indication information transmitted by a base station; wherein the precoding indication information is determined by a first precoding vector and a second precoding vector; the second precoding vector is determined based on the first precoding vector, and the second precoding vector is used for measuring a reference signal.

18. The method according to claim 17, wherein the first precoding vector is determined based on a preset linear construction function.

19. The method according to claim 18, wherein the first precoding vector is obtained by weighting n codewords, and the n codewords are codewords selected from a codebook based on the preset linear construction function, wherein n is an integer greater than or equal to 1.

20. The method according to claim 17, wherein the second precoding vector is obtained by processing the first precoding vector based on a nonlinear processing function.

21. The method according to claim 17, wherein m elements in the second precoding vector have equal magnitudes, wherein m is an integer greater than 1.

22. The method according to claim 17, wherein the precoding indication information comprises at least one of distortion indication information, difference indication information or parameter indication information; wherein the distortion indication information is configured to indicate whether the first precoding vector is same as the second precoding vector; the difference indication information is configured to indicate a difference between the first precoding vector and the second precoding vector; and the parameter indication information is configured to indicate parameters of a nonlinear function used for generating the second precoding vector.

23. The method according to claim 22, wherein the difference indication information comprises at least one of: a residual vector obtained based on the difference between the first precoding vector and the second precoding vector, a magnitude of the residual vector, or a square of the magnitude of the residual vector.

24. The method according to claim 17, wherein before receiving the precoding indication information transmitted by the base station, the method further comprises:
receiving the reference signal transmitted by the base station.

25. The method according to claim 17, wherein after receiving the precoding indication information transmitted by the base station, the method further comprises:
receiving the reference signal transmitted by the base station.

26. The method according to claim 17, wherein the precoding indication information is carried in the reference signal.

27. The method according to claim 17, wherein the precoding indication information is carried in signaling, and the signaling comprises at least one of: a master information block, a system information block, downlink control information, control signaling of a media access control-control element, or control signaling of a radio resource control layer.

28. The method according to claim 17, wherein receiving the precoding indication information transmitted by the base station, comprises:
receiving the precoding indication information after quantization processing, wherein the quantization processing comprises uniform quantization and non-uniform quantization.

29. The method according to claim 17, further comprising:
transmitting a first message to the terminal device, wherein the first message is used for requesting the precoding indication information.

30. The method according to claim 29, wherein the first message comprises a transmission manner of the precoding indication information, and the transmission manner comprises one of following: being carried in the reference signal and being carried in signaling.

31. The method according to claim 29, wherein the first message is carried in a sounding reference signal; or the first message is carried in uplink control information.

32. A communication device, comprising a memory and a processor, wherein the memory is coupled to the processor; the memory is configured to store instructions executable by the processor; and the processor, when executing the instructions, performs the precoding information indication method according to any one of claims 1 to 31.

33. A computer-readable storage medium, wherein the computer-readable storage medium has computer instructions stored thereon, and the computer instructions, when running on an electronic device, enable the electronic device to perform the precoding information indication method according to any one of claims 1 to 31.

FIG. 1

FIG. 2

FIG. 3

Base station

Terminal device

S201, determining a first
precoding vector

S202, processing the first
precoding vector to obtain a
second precoding vector

S203, determining precoding
indication information
based on the first precoding
vector and the second
precoding vector

S204, the precoding indication
information

S301, transmitting a reference signal to
the terminal device based on the
precoding indication information

FIG. 4

```
┌─────────────────┐                    ┌─────────────────┐
│  Base station   │                    │ Terminal device │
└─────────────────┘                    └─────────────────┘
         │                                      │
┌─────────────────────┐                         │
│ S201, determining a │                         │
│   first precoding   │                         │
│       vector        │                         │
└─────────────────────┘                         │
         │                                      │
┌─────────────────────┐                         │
│ S202, processing the│                         │
│ first precoding     │                         │
│ vector to obtain a  │                         │
│ second precoding    │                         │
│       vector        │                         │
└─────────────────────┘                         │
         │                                      │
┌─────────────────────┐                         │
│ S203, determining   │                         │
│ precoding indication│                         │
│ information based on │                        │
│ the first precoding │                         │
│ vector and the      │                         │
│ second precoding    │                         │
│      vector         │                         │
└─────────────────────┘                         │
         │   S301, transmitting a reference     │
         │   signal to the terminal device      │
         │   based on the precoding indication  │
         │           information                │
         │ ──────────────────────────────────▶ │
         │                                      │
         │   S204, the precoding indication     │
         │           information                │
         │ ──────────────────────────────────▶ │
         │                                      │
```

FIG. 5

```
┌──────────┬──────────────────┬──────────┬──────────────────┐
│          │   Precoding      │          │   Precoding      │
│ Signal 1 │   indication     │ Signal 2 │   indication     │  ······
│          │  information 1   │          │  information 2   │
└──────────┴──────────────────┴──────────┴──────────────────┘───────▶
                              (a)                              Time
```

```
┌──────────────────┬──────────┬──────────────────┬──────────┐
│   Precoding      │          │   Precoding      │          │
│   indication     │ Signal 1 │   indication     │ Signal 2 │  ······
│  information 1   │          │  information 2   │          │
└──────────────────┴──────────┴──────────────────┴──────────┘───────▶
                              (b)                              Time
```

FIG. 6

```
┌─────────────────────┐                    ┌─────────────────────┐
│    Base station     │                    │   Terminal device   │
└─────────────────────┘                    └─────────────────────┘
          │                                           │
  ┌───────────────────┐                               │
  │ S201, determining │                               │
  │     a first       │                               │
  │ precoding vector  │                               │
  └───────────────────┘                               │
          │                                           │
  ┌───────────────────┐                               │
  │ S202, processing  │                               │
  │  the first        │                               │
  │ precoding vector  │                               │
  │ to obtain a       │                               │
  │ second precoding  │                               │
  │     vector        │                               │
  └───────────────────┘                               │
          │                                           │
  ┌───────────────────┐                               │
  │ S203, determining │                               │
  │   precoding       │                               │
  │ indication        │                               │
  │ information based  │                              │
  │ on the first      │                               │
  │ precoding vector  │                               │
  │ and the second    │                               │
  │ precoding vector  │                               │
  └───────────────────┘                               │
```

S401, first message

←─────────────────────────────────────────

S204, the precoding indication information

─────────────────────────────────────────→

## FIG. 7

| Signal 1 Precoding indication information 1 | Signal 2 Precoding indication information 2 | Signal 3 Precoding indication information 3 | ⋯⋯ |

（a）                                                    Time

| Signal 2 Precoding indication information 1 | Signal 3 Precoding indication information 2 | Signal 4 Precoding indication information 3 | ⋯⋯ |

（b）                                                    Time

| Signal 1 Precoding indication information 2 | Signal 2 Precoding indication information 3 | Signal 3 Precoding indication information 4 | ⋯⋯ |

（c）                                                    Time

## FIG. 8

| Signal 1<br>Precoding indication information 1<br>Precoding indication information 2 | Signal 2 | Signal 3<br>Precoding indication information 3<br>Precoding indication information 4 | Signal 4 | ⋯⋯ |

Time

(a)

| Signal 1 | Signal 2<br>Precoding indication information 1<br>Precoding indication information 2 | Signal 3 | Signal 4<br>Precoding indication information 3<br>Precoding indication information 4 | ⋯⋯ |

Time

(b)

FIG. 9

| Signal 1 | Signal 2 | Precoding indication information 1<br>Precoding indication information 2 | ⋯⋯ |

Time

(a)

| Precoding indication information 1<br>Precoding indication information 2 | Signal 1 | Signal 2 | ⋯⋯ |

Time

(b)

FIG. 10

Base station        Terminal device

Sa1, a reference signal and precoding
indication information

Sa2, measurement result

FIG. 11

FIG. 12

FIG. 13

| Base station | | Terminal device |
|---|---|---|

Reference signal 1 and precoding indication information 1 →

Reference signal 2 and precoding indication information 2 →

Reference signal 3 and precoding indication information 3 →

← Measurement result

FIG. 14

Indication apparatus 600

Determining module — 601

Processing module — 602

Transmitting module — 603

Receiving module — 604

FIG. 15

Indication apparatus 700

Receiving module — 701

Transmitting module — 702

FIG. 16

— 800

— 802 — 803

— 804 Processor Communication interface

Bus

Memory

— 801

FIG. 17

## INTERNATIONAL SEARCH REPORT

| International application No. |
|---|
| **PCT/CN2024/090874** |

| A. | CLASSIFICATION OF SUBJECT MATTER |
|---|---|
| | H04B7/0456(2017.01)i |

According to International Patent Classification (IPC) or to both national classification and IPC

| B. | FIELDS SEARCHED |
|---|---|

Minimum documentation searched (classification system followed by classification symbols)

    IPC: H04B

Documentation searched other than minimum documentation to the extent that such documents are included in the fields searched

Electronic data base consulted during the international search (name of data base and, where practicable, search terms used)

    CNTXT, ENTXTC, CNKI, VEN: 非线性预编码, 加权, 码本, 线性预编码, 硬件, 预编码, 预编码向量, 预编码指示, 模, DAC, PMI, precoder, precoding, LP, NLP, modulo

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2020107188 A1 (GUANGDONG OPPO MOBILE TELECOMMUNICATIONS CORP., LTD.) 04 June 2020 (2020-06-04) <br> description, page 6, line 12-page 10, line 33 | 1-5, 8-21, 24-33 |
| A | CN 107104708 A (RF DSP INC.) 29 August 2017 (2017-08-29) <br> entire document | 1-33 |
| A | CN 113169772 A (SONY GROUP CORP.) 23 July 2021 (2021-07-23) <br> entire document | 1-33 |
| A | US 2019349224 A1 (SCKIPIO TECHNOLOGIES S.I LTD.) 14 November 2019 (2019-11-14) <br> entire document | 1-33 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2024** | **03 August 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**EP 4 773 516 A1**

INTERNATIONAL SEARCH REPORT

Information on patent family members

International application No.

**PCT/CN2024/090874**

| Patent document cited in search report | | | Publication date (day/month/year) | Patent family member(s) | | | Publication date (day/month/year) |
|---|---|---|---|---|---|---|---|
| WO | 2020107188 | A1 | 04 June 2020 | None | | | |
| CN | 107104708 | A | 29 August 2017 | WO | 2015095844 | A1 | 25 June 2015 |
| | | | | EP | 3085042 | A1 | 26 October 2016 |
| | | | | EP | 3085042 | A4 | 17 May 2017 |
| | | | | EP | 3085042 | B1 | 02 December 2020 |
| | | | | KR | 20160100933 | A | 24 August 2016 |
| | | | | KR | 102287454 | B1 | 09 August 2021 |
| | | | | US | 2016323026 | A1 | 03 November 2016 |
| | | | | US | 9847819 | B2 | 19 December 2017 |
| CN | 113169772 | A | 23 July 2021 | WO | 2020108367 | A1 | 04 June 2020 |
| | | | | US | 2023163816 | A1 | 25 May 2023 |
| | | | | US | 11936446 | B2 | 19 March 2024 |
| US | 2019349224 | A1 | 14 November 2019 | GB | 201910648 | D0 | 11 September 2019 |
| | | | | GB | 2573906 | A | 20 November 2019 |
| | | | | GB | 2573906 | B | 15 April 2020 |
| | | | | US | 10594520 | B2 | 17 March 2020 |
| | | | | WO | 2018122855 | A1 | 05 July 2018 |

Form PCT/ISA/210 (patent family annex) (July 2022)

**REFERENCES CITED IN THE DESCRIPTION**

**Patent documents cited in the description**

- CN 202311292717